# EUROPÄISCHE PATENTANMELDUNG

(11) **EP 4 424 735 A1**
(43) Veröffentlichungstag der Anmeldung: **04.09.2024**
(21) Anmeldenummer: 23159157.9
(22) Anmeldetag: 28.02.2023
(51) Int. Cl.: C08G 18/10, C08K 3/22

(54) **INJIZIERFÄHIGES THERMISCHES KONTAKT- UND FÜLLMATERIAL UND DESSEN VERWENDUNG FÜR GROSSFLÄCHIGE BAUTEILE**

(71) Anmelder: POLYTEC PT GMBH Polymere Technologien, 76307 Karlsbad (DE)
(72) Erfinder: Stößer, Benjamin, 68219 Mannheim (DE); Mayer, Christoph, 76227 Karlsruhe (DE)
(74) Vertreter: LBP Lemcke, Brommer & Partner Patentanwälte mbB

(57) **Zusammenfassung**

Die Erfindung betrifft ein injizierfähiges thermisches Kontakt- und Füllmaterial, das aus einer Komponente A und einer Komponente B besteht. Die Komponente A weist folgendes auf: ein silanfunktionalisiertes Prepolymer oder eine Mischung von silanfunktionalisierten Prepolymeren, wobei das silanfunktionalisierte Prepolymer auf Polyurethane, Polyol / Diol oder Polyacrylate basiert; einen Weichmacher, der ein mehrfachfunktioneller Carbonsäureester ist; ein Netz- und Dispergieradditiv aufweisend zumindest eine Aminzahl größer >20 mg KOH/g, gemessen nach DIN 19645; eine Mischung aus funktionalisierten Organosilanen; ZnO und einen weiteren wärmeleitfähigen Füllstoff oder ein Gemisch aus mehreren wärmeleitfähigen Füllstoffen. Die Komponente B weist folgendes auf: einen Weichmacher, der ein mehrfachfunktioneller Carbonsäureester ist; ein Netz- und Dispergieradditiv aufweisend zumindest eine Aminzahl größer >20 mg KOH/g, gemessen nach DIN 19645; einen wärmeleitfähigen Füllstoff oder ein Gemisch aus mehreren wärmeleitfähigen Füllstoffen Wasser und einen Organometall-Katalysator. Das Mischungsverhältnis nach Volumen der Komponente A zur Komponente B beträgt 1:1 bis 10:1.

## Beschreibung

Im Betrieb von elektronischen und energietechnischen Systemen entsteht Wärme, die schnell und effektiv aus der Wärme erzeugenden Einheit abgeführt werden muss. Zur thermischen Kontaktierung der aktiven Komponenten mit den entsprechenden Wärmezu- oder -abführungen wird klassischerweise ein fester mechanischer Kontakt entweder durch Schrauben, Klammern oder stoffschlüssig mittels Lötens oder Schweißen erzeugt. Das mechanische Fixieren hat zwar den Vorteil, dass die Verbindung wieder lösbar ist. Zwischen den aktiven Komponenten verläuft der Wärmeübergang jedoch nur über wenige Kontaktpunkte. Da sich dazwischen eine Luftschicht befindet, die ein sehr schlechter Wärmeleiter ist, wird die erzeugte Wärme nur unvollständig abgeführt. Um die Wärmeübertragung zu verbessern, werden daher thermisch leitfähige Materialien in die Fuge zwischen den aktiven Komponenten eingebracht, d.h. zwischen der wärmeerzeugenden und der wärmeableitenden Komponente. Diese Materialien haben eine doppelte Rolle: sie leiten die Wärme weiter und gleichzeitig verbinden sie die aktiven Komponenten miteinander.

Solche thermisch leitfähigen Materialien sind in Form von Wärmeleitpasten aus dem Stand der Technik bekannt. Zum einen werden die Wärmepasten in der Mikroelektronik zur Verbindung von sehr kleinen Komponenten verwendet.

Im Allgemeinen werden solche Wärmepasten bei kleinflächiger Anwendung auf die einzelnen aktiven Komponenten aufgetragen. Durch Kraftausübung auf die Komponente werden sie miteinander verbunden (Verpressung).

In dem Elektronikbereich sind die zu verklebenden Flächen sehr klein. Gleichzeitig wird durch hochfrequente Schaltintervalle, hochtaktende integrierte Schaltkreise oder Prozessoren etc. sehr hohe Wärme erzeugt, die durch diese kleine Fläche abgeleitet werden muss, um eine Beschädigung der jeweiligen Elemente und demnach des ganzen Geräts zu vermeiden. Demnach kommt es bei der Auswahl eines thermischen Kontakt- und Füllmaterials in diesem Bereich vor allem auf seine thermisch leitenden Fähigkeiten aufgrund der sehr hohen Wärme, die durch die sehr kleinen Flächen abgeleitet werden muss.

Eine Anwendung von den Wärmepasten zur Verbindung von großflächigen Komponenten ist in DE 0 2018 102 989 B4 beschrieben. Das Dokument offenbart eine reaktiv aushärtende Wärmeleitpaste, die auf silanfunktionalisierten Prepolymeren basiert, für die Verwendung im Thermomanagment von modular aufgebauten Akkumulatoren umfassend mehrere miteinander verbundenen Batteriezellen zum Beispiel in Elektrofahrzeugen.

Bei einer großflächigen Anwendung, wie beispielsweise in den Akkumulatoren von Elektrofahrzeugen, wird die Wärmepaste vor dem Einsetzen der einzelnen Akkumulatoren oder vorgefertigten Batteriemodulen umfassend mehrere Batteriezellen auf einen Träger oder eine Bodenplatte aufgetragen und mit dem Setzen der einzelnen Akkumulatoren oder vorgefertigten Batteriemodulen auf eine definierte Schichtstärke verdrückt.

Die Anforderungen für ein thermisches Kontakt- und Füllmaterial, das für großflächige Anwendung vorgesehen ist, sind deutlich komplexer aus den nachfolgend beschriebenen Gründen.

Je grösser die zu verbindende Fläche ist, desto grösser wird die benötigte Kraft, die auf die Flächen ausgeübt werden muss, um diese miteinander zu verbinden. Aufgrund der intrinsisch hohen Viskosität solcher hochgefüllten Systeme, wie die oben beschriebenen Wärmepasten, ist eine hohe Kraft notwendig, um innerhalb einer akzeptablen Taktzeit, die bei der Produktion von höchster Relevanz ist, die Verpressung der aktiven Komponente zu bewerkstelligen. Man kann aber die Taktzeit nicht durch Erhöhung der ausübenden Kraft beliebig beschleunigen. Selbst die für die Anwendung in den Elektrofahrzeugen vorgesehenen einzelnen Akkumulatoren oder vorgefertigten Batteriemodule umfassend mehrere Batteriezellen halten nur eine begrenzte Kraft aus, bevor sie sich verziehen, eine Verletzung des elektrochemischen Aufbaus oder einen anderen Defekt erleiden, welcher unverzüglich auftreten kann oder als Folge daraus die Lebensdauer der Batterie oder des Akkumulators und somit des Fahrzeugs deutlich herabsetzen kann.

Die beschriebenen Nachteile des Verfahrens umfassend die Verpressung der aktiven Komponente können durch die Verwendung eines sogenannten Injektionsverfahrens umgangen werden. Bei dem Injektionsverfahren wird das Kontakt- und Füllmaterial nicht aufgetragen, sondern injiziert. Dadurch wird erzielt, dass der Zusammenbau eines beispielsweise Akkumulators umfassend mehrere Batteriezellen während des Produktionsverfahrens deutlich beschleunigt wird, wobei gleichzeitig sichergestellt wird, dass das Risiko einer Verletzung der Batteriezellen im Vergleich zu dem oben genannten traditionellen Prozess erheblich vermindert wird.

Um das Injektionsverfahren anwenden zu können, muss konstruktions- und prozessbedingt auf einen definierten Spalt geachtet werden, welcher durch die Injektion eines thermischen Kontakt- und Füllmaterials vollständig und luftfrei ausgefüllt wird und dadurch eine sehr gute Wärmeleitung der zu verbindenden Komponente sicherstellt. Um den Spalt vollständig und luftfrei mit dem thermischen Kontakt- und Füllmaterial zu füllen, ist eine Injektion aus einer oder mehreren Injektionsstellen notwendig. Dadurch wird sichergestellt, dass die ganze in dem Spalt vorliegende Luft entweicht. Das Injektionsverfahren muss derart gestaltet werden, dass keine Lufteinschlüsse durch die Injektion auftreten. Dies kann durch eine Strömungssimulation als auch durch eine geeignete Auslegung des Injektionsverfahrens erfolgen. Zum einen kann dies durch die Art und Ort der Öffnungen für die Injektion oder zum anderen durch gezielte Veränderungen des Injektionsdrucks an einer oder mehreren der Injektionsöffnungen erzielt werden. Der Injektionsvorgang ist beendet, nachdem die Wärmeleitpaste aus dem Austrittsloch der Luft austritt und somit keine Luft mehr im Spalt enthalten ist.

Die Anforderung an das thermische Kontakt- und Füllmaterial, das für das Injektionsverfahren geeignet wäre, sind jedoch sehr hoch. Vor allen muss das thermische Kontakt- und Füllmaterial eine entsprechende Viskosität aufweisen. Bei einer zu hohen Viskosität, wie es beispielsweise bei den aus DE 0 2018 102 989 B4 und anderen aus dem Stand der Technik bekannten Wärmepasten der Fakt ist, wird ein hoher Gegendruck während der Injektion erzeugt, welcher starke Pumpen und Injektionsdrücke voraussetzt. Wenn man es auf großflächige Anwendungen überträgt, wird die Anforderung an die Injektionspumpen sehr groß oder manchmal nicht umsetzbar sein.

Da die Nachfrage an wärmeleitfähigen Kontakt- und Füllmaterialien insbesondere für eine großflächige Anwendung immer größer wird, da neue Batteriekonzepte z.B. in der E-Mobilität immer abhängiger von einem funktionierenden Thermomanagement werden, liegt daher der vorliegenden Erfindung die Aufgabe zugrunde, ein thermisches Kontakt- und Füllmaterial bereitzustellen, das die gewünschte Eigenschaften aufweist, um für großvolumige und großflächige Anwendungen in einem Injektionsverfahren verwendet werden zu können, gleichzeig aber dem hohen Wärmetransport standhält.

Die der vorliegenden Erfindung zugrundeliegende Aufgabe wurde überraschenderweise durch ein injizierfähiges thermisches Kontakt- und Füllmaterial mit den Merkmalen des Anspruchs 1 gelöst. Vorteilhafte Weiterbildungen der erfindungsgemäßen Idee sind Gegenstand von Unteransprüchen. Weitere vorteilhafte Weiterbildungen des erfindungsgemäßen injizierfähigen thermischen Kontakt- und Füllmaterials sind der Beschreibung und den Beispielen zu entnehmen.

Unter der Formulierung "Prepolymer" ist im Sinne der vorliegenden Erfindung jedes Polymer oder Oligomer zu verstehen, welches durch eine spezielle Vorreaktion vorverlängert wurde und/oder welchem durch eine spezielle Vorreaktion neue funktionelle Gruppen eingeführt wurden, die die gewählte Polymerisierungsreaktion in einem weiteren Schritt erst ermöglichen.

Unter dem Begriff "silanfunktionalisiertes Prepolymer" sind im Sinne der vorliegenden Erfindung alkoxysilan-funktionalisierte Oligomere, Polymere oder Prepolymere zu verstehen. Silanmodifizierte Prepolymere kondensieren unter Abspaltung der Alkoxygruppen in Gegenwart von Wasser und bilden weitmaschige Polymernetzwerke. Hier ist aufgrund der oben genannten Definition des Prepolymers nicht entscheidend, ob das Prepolymerrückgrat schon aus einem Prepolymer besteht (z.B. ein polyurethanbasiertes Prepolymer) oder es sich dabei um ein reines Oligomer oder Polymer handelt. Schon durch die spezielle Vorreaktion der Silanfunktionalisierung sind alle silanmodifizierte Polymere auch gleichzeitig Prepolymere gemäß obiger Definition.

Da es kein allgemeiner Konsens in der Nomenklatur und Unterscheidung verschiedener silanmodifizierter Prepolymere besteht, sind alle Arten der kommerziell oder nicht-kommerziell herstellbaren silylisierten Polymere und Prepolymere als silanfunktionalisierte Prepolymere im Sinne der vorliegenden Erfindung angesehen werden.

Unter dem Begriff "Weichmacher" sind im Sinne der vorliegenden Erfindung niedrigviskose, für die gewählte Vernetzungschemie unreaktive Zusätze zu verstehen, die zum einen der Viskositätserniedrigung der Flüssigkomponenten dienen. Nach Aushärtung der Matrix verbleibt dieser Weichmacher innerhalb des Polymernetzwerkes und erniedrigt dort die Mechanik des ausgebildeten Polymers, so dass dieser weicher, elastischer, flexibler und/oder dehnbarer wird, da die typischerweise sehr offenvernetzten Polymernetzwerke durch den enthaltenen Weichmacher eine höhere Beweglichkeit besitzen. Chemisch gesehen ist der Weichmacher nicht kovalent in die Polymermatrix eingebunden, interagiert jedoch mit seinen polaren Gruppen mit dem polaren Gruppen des Polymernetzwerks und lagert sich so zwischen den Polymerketten an, so dass diese eine höhere Beweglichkeit besitzen und die gesamte Struktur flexibler wird. Weichmacher sind tendenziell niedrigmolekular, es können jedoch auch polymere Weichmacher eingesetzt werden, z.B. auf Basis von Polypropyleneglykol. Typische Beispiele von Weichmacher sind Stoffe basierend auf der Chemie der Carbonsäureester, fette Öle, Weichharze und Campher.

Unter dem Begriff "Netz- und Dispergieradditive" sind im Sinne der vorliegenden Erfindung Additive zu verstehen, welche die Eigenschaft übernehmen, zwei miteinander nicht kompatible Substanzen miteinander zu vermischen. Dies ist üblicherweise aus den flüssig-flüssig Systemen unter der Bildung von Emulsionen bekannt. Es ist jedoch bei der Bildung von stabilen flüssig-fest Systemen ebenfalls von hoher Bedeutung. Durch die Kompatibilisierung der Grenzflächenspannung und der besseren Benetzung der Feststoffpartikel mit dem Flüssigmedium wird eine Stabilisierung dieser Dispersion erreicht. Diese Additive werden eingesetzt, um die Feststoffe möglichst gut, idealerweise vollständig mit der Flüssigphase zu benetzen, was auch die benötigte Scherwirkung für die Auftrennung der Agglomerate in die Einzelpartikel während der Herstellung erleichtert. Zusätzlich, verbleibt das Netz- und Dispergieradditiv auf der Partikeloberfläche und stabilisiert diesen in der Flüssigphase, so dass entweder eine stabile Dispersion entsteht, oder zumindest eine Reagglomeration und folglich ein schnelles Absetzen/Sedimentieren dieser Füllstoffe so weit wie möglich vermieden wird. Dadurch, dass die Netz- und Dispergieradditive als Tenside dienen und ein Teil dieser amphiphilen Moleküle oder Polymere gut in der flüssigen Phase löslich sind, wird eine Stabilisierung der Partikel auch aufgrund des ausgeprägten sterischen Effekts dieser Ketten um die Partikeloberfläche erklärt, welches bei einer starken Annäherung dieser Partikel aneinander eine repulsive Kraft erfährt, so dass die Partikel immer eine gewisse Distanz zueinander einhalten müssen und somit eine mechanische Interaktion (z.B. Agglomerierung, Reibungseffekte der Partikel, die zu einer höheren Viskosität führen würden etc.) minimiert. Dieser Effekt kann entweder durch die sterische Abstoßung erfolgen, oder in einem ähnlichen Prinzip durch eingebrachte Ladungen via chemische Funktionalitäten (Carboxylate, Ammoniumgruppen etc.), welche durch deren elektrostatischen Abstoßung untereinander den gleichen Effekt erzielen, wobei man beide Wirkungsweisen auch kombinieren kann und somit eine elektrosterische Stabilisierung der Partikel erreicht. Generell kann man sagen, dass elektrostatische und elektrosterische Abstoßung sehr gut für relativ polare Flüssigkeiten funktioniert, wohingegen sterische Abstoßung alleine meistens für sehr unpolare Flüssigkeiten verwendet wird.

Unter dem Begriff "Organosilane" sind im Sinne der vorliegenden Erfindung chemische Verbindungen zu verstehen, die eine Silylgruppe mit mindestens einem organischen Rest und eins bis drei hydrolysierbare Substituenten oder Hydroxylgruppen aufweisen. Hydrolysierbare Gruppen sind zum Beispiel Alkoxygruppen. Es können oligomere Ethylenglykolketten oder Acetoxyfunktionen sein. Reaktive Silangruppen sind vollständig oder partiell hydrolysierte Alkoxysilangruppen, welche dann Silanolgruppen bilden. Es gibt viele verschiedene Arten solcher Organosilane, welche sich vor allem im Aufbau des organischen Rests unterscheiden und durch ihre chemische Struktur beschrieben werden. Als Beispiel können Hydroxysilane, Isocyanatosilane, Aminosilane, Thiosilane, Vinylsilane genannt werden, die jeweils eine organische Kette zwischen der Silylgruppe und mindesten eine weitere Funktionalität aufweisen. Es gibt natürlich Organosilane aufweisend mehr als eine Funktionalität wie z.B. Aminosilane, die eine sekundäre und eine primäre Aminogruppe enthalten oder Organoalkoxysilane, die in dem organischen Teil mindestens eine Hydroxylgruppe (OH), Isocyanatgruppe, Aminogruppe oder eine Vinylgruppe aufweisen.

In Bezug auf die enthaltene(n) Funktionalität(en) kann man Organosilane in folgende Gruppen unterteilen:
- Ohne weitere Funktionalität (organische Kette) z.B. Octyltrimethoxysilan, OCTMO;
- Primäre Aminfunktionalität z.B. 3-Aminopropyltrimethoxyssilan, AMMO;
- Sekundäre Aminofunktionalität z.B. N-(n-butyl)-3-aminopropyl-trimethoxysilan
- Diaminofunktionell z.B. N-(2-Aminoethyl)-3-aminopropyltrimethoxysilane, DAMO;
- Epoxyfunktionell z.B. 3-glycidyloxy-propyl-trimethoxysilan, GLYMO;
- Thiofunktionell z.B.3-mercaptopropyl-trimethoxysilan, MTMO;
- Methacrylfunktionell z.B. 3-methacryloxypropyltrimethoxysilan, MEMO;
- Vinylfunktionell z.B. Vinyltrimethoxysilan, VTMO.

Die genannten chemisch und kommerziell erhältlichen Verbindungen in jeweiligen Gruppen dienen ausschließlich als Beispiele und die Gruppen sind nicht auf diese beschränkt.

Unter dem Begriff "wärmeleitfähiger Füllstoffe" sind im Sinne der vorliegenden Erfindung chemische Verbindungen zu verstehen, die Formulierungen zugefügt werden, um die Füllung zu gewehrleisten und gleichzeitig wärmeleitend sind. Typische Wärmeleitfähige Füllstoffe sind:
- Metalle, die aber wegen elektrischer Leitfähigkeit für viele Anwendungen ungeeignet sind;
- Aluminiumoxid/-hydroxid, und
- Magnesiumoxid/-hydroxid sowie

Diamant, Carbonnanotubes, Aluminiumnitrid (AIN), Bornitrid (BN) Graphit.

Unter dem Begriff "Katalysator" sind im Sinne der vorliegenden Erfindung chemische Verbindungen zu verstehen, die die Geschwindigkeit einer Reaktion erhöhen, bzw. deren Aktivierungsenergie durch die Ausbildung einer Zwischenstufe zwischen dem Katalysator und den Reaktanden herabsetzen, ohne sich selbst in der Reaktion zu verbrauchen.

Das erfindungsgemäße injizierfähige thermische Kontakt- und Füllmaterial umfasst eine Komponente A und eine Komponente B besteht, wobei
die Komponente A folgendes aufweist:
   1.A) ein silanfunktionalisiertes Prepolymer oder eine Mischung von silanfunktionalisierten Prepolymeren, wobei das silanfunktionalisierte Prepolymer auf Polyurethane, Polyol / Diol oder Polyacrylate basiert;
   2.A) einen Weichmacher, der ein mehrfachfunktioneller Carbonsäureester ist;
   3.A) ein Netz- und Dispergieradditiv aufweisend zumindest eine Aminzahl grö-βer >20 mg KOH/g gemessen nach DIN 19645;
   4.A) eine Mischung aus funktionalisierten Organosilanen;
   5.A) ZnO und einen weiteren wärmeleitfähigen Füllstoff oder ein Gemisch aus mehreren wärmeleitfähigen Füllstoffen; und wobei
die Komponente B folgendes aufweist:
   1.B) einen Weichmacher, der ein mehrfachfunktioneller Carbonsäureester ist;
   2.B) ein Netz- und Dispergieradditiv aufweisend zumindest eine Aminzahl grö-βer >20 mg KOH/g gemessen nach DIN 19645;
   3.B) einen wärmeleitfähigen Füllstoff oder ein Gemisch aus mehreren wärmeleitfähigen Füllstoffen;
   4.B) Wasser; und
   5.B) einen Organometall-Katalysator; und wobei
das Mischungsverhältnis nach Volumen der Komponente A zur Komponente B 1:1 bis 10:1 beträgt.

Das erfindungsgemäße injizierfähige thermische Kontakt- und Füllmaterial zeigt überraschenderweise Verarbeitungseigenschaften, welche für eine Anwendung in dem Injektionsverfahren zwingend erforderlich ist. Überraschenderweise wurde gefunden, dass die Zugabe von Zinkoxid zu dieser Abmischung erstaunliche Veränderungen der Verarbeitungseigenschaften erzeugt, welche für eine Injektionsanwendung zwingend erforderlich ist.

Es ist den Entwicklern auf dem Gebiet bekannt, dass um eine wärmeleitfähige Zusammensetzung zu verflüssigen zum einen eine Formulierung mit größeren Partikeln ausgewählt werden, da das Verhältnis Oberfläche zu Volumen mit höheren Partikelgrößen immer weiter abnimmt. Zum anderen sollen für die Zusammensetzung annähernd runde Partikelgröße ausgewählt werden. Dies trägt dazu bei die Viskosität zu erniedrigen, da die Partikel in einem hochgefüllten System sich eher wie Kugellager aneinander vorbeibewegen können, anstatt sich zu verhaken. Typischerweise haben jedoch derartige Zusammensetzungen große Nachteile in der Applikation und Injektion. Der große Nachteil ist die hohe Sedimentationsneigung derartig hergestellten Zusammensetzungen, die die Lagerstabilität stark beeinflusst, indem sich der Füllstoff während Lagerung und Transport absetzt, separiert und eine dichte Bodenschicht bildet, die auch mit stärkerer Scherung nicht wieder vollständig agglomeriert in Suspension gebracht werden kann. Ferner haben solche Zusammensetzungen während des Injektionsverfahrens den Nachteil, dass durch die hohen benötigten Pumpdrücke eine Entmischung von Fest- und Flüssiganteilen stattfinden kann, so dass eine kontinuierliche und reproduzierbare Injektion unmöglich gemacht wird.

Um diese Nachteile zu vermeiden, werden der Zusammensetzung üblicherweise Thixotropiermittel beigefügt, die die Flüssigphase durch Partikelwechselwirkungen oder durch zum Beispiel Gelbildung verdicken. Die Zugabe vom Thixotropiermittel führt jedoch zu keiner selbstverfließenden Formulierung mehr, die so flüssig und injizierbar wie möglich ist, sondern zu einer höherviskosen Paste, die zwar das Absetzen verhindert aber auch nicht für eine Injektionsverhalten geeignet ist.

Überraschenderweise wurde jedoch gefunden, dass ein teilweiser Austausch der wärmeleitfähigen Füllstoffe durch Zinkoxid das Absetzverhalten der Füllstoffe und die Injektionsfähigkeit stark verbessert, ohne die Viskosität stark zu beeinflussen. Da Zinkoxid selbst eine sehr hohe Wärmeleitfähigkeit hat, ist der Austausch durch Zinkoxid auch mit keinem Abfall der Wärmeleitfähigkeit verbunden. Somit wird hier ein injizierfähiges thermisches Kontakt- und Füllmaterial bereitgestellt, das keine der oben genannten Nachteile aufweist und für großflächige Anwendung geeignet ist.

Eine vorteilhafte Weiterbildung des injizierfähigen thermischen Kontakt- und Füllmaterials sieht vor, dass ein silanfunktionalisiertes Prepolymer oder eine Mischung von silanfunktionalisierten Prepolymeren verwendet wird, wobei das silanfunktionalisierte Prepolymer auf Polyurethane, Polyol / Diol oder Polyacrylate basiert.

Eine vorteilhafte Weiterbildung des injizierfähigen thermischen Kontakt- und Füllmaterials sieht vor, dass die Komponente A ausschließlich ein auf Polyurethane basierendes silanfunktionalisiertes Prepolymer aufweist.

Der Oberbegriff des silanfunktionalisierten Prepolymers umfasst in Sinne der vorliegenden Erfindung eine Verbindung der folgenden Formel: 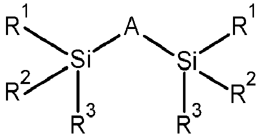 Bei A in der oben genannten Formel handelt es sich um einen polymeren odas Prepolymeren Backbone (Rückgrat), welcher als Basis
- ein Polyol-/Diol (z.B. Polyetherpolyol/-diol, Polypropyleneglykol),
- ein telechele Polyacrylate hat oder
- selbst Prepolymere basierend auf verschiedenen Technologien, z.B. ein Polyurethan-modifziertes Prepolymer sein kann, welches in einem weiteren Reaktionsschritt mit alkoxy-geschützten Silangruppen modifiziert.

Die Substituenten R¹, R² und R³ können im Sinne der vorliegenden Erfindung chemische Gruppen sein, wobei mindestens R¹ und R² eine Alkoxygruppe und R³ entweder eine Alkoxygruppe oder eine Alkylgruppe ist.

Als Alkylgruppe ist im Sinne der vorliegenden Erfindung eine C₁₋C₁₀-Alkyl Gruppe zu verstehen. C₁-C₁₀-Alkyl umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, isoOctyl, n-Nonyl, n-Decyl und dergleichen.

Als Alkoxygruppe ist im Sinne der vorliegenden Erfindung eine O-C₁-C₁₀-Alkyl Gruppe zu verstehen. C₁-C₁₀ Alkyl ist wie oben definiert.

Eine weitere vorteilhafte Weiterbildung des injizierfähigen thermischen Kontakt- und Füllmaterials sieht vor, dass die Alkoxygruppe ausgewählt ist aus: OCH₃ und OCH₂CH₃ und die Alkylgruppe CH₃ ist.

Eine weitere besonders vorteilhafte Weiterbildung des injizierfähigen thermischen Kontakt- und Füllmaterials sieht vor, dass die Alkoxygruppe OCH₃ und die Alkylgruppe CH₃ ist.

Eine weitere vorteilhafte Weiterbildung des injizierfähigen thermischen Kontakt- und Füllmaterials sieht vor, dass ein silanfunktionalisiertes Prepolymer oder eine Mischung der silanfunktionalisierten Prepolymere aus folgenden Gruppen ausgewählt wird:

### - Gruppe A

Diese Gruppe umfasst Prepolymere, die auf einem Backbone (Rückgrat) mit Polyol/Diol basieren und sind unter folgenden chemischen Namen bekannt: silylmodified polymers (SMP), modified-silane polymers, MS polymers, silane-terminated polymers.

Kommerziell erhältliche Prepolymere, die zu dieser Gruppe gehören, sind zum Beispiel:
Dimethoxysilane MS Polymer S (z.B. S303H) und high strength Dimethoxysilane MS Polymer SAX (z.B. SAX 350).

Am meisten bevorzugt für das injizierfähige thermische Kontakt- und Füllmaterial ist das Prepolymer der Formel A-1:

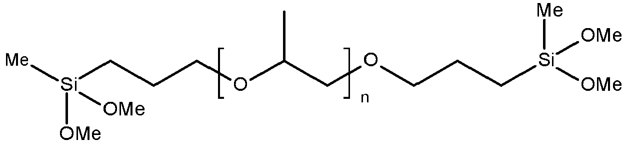

### - Gruppe B

Diese Gruppe umfasst silanfunktionalisierte Prepolymere mit telechelen Polyacrylaten als Backbone.

Kommerziell erhältliche Polymere, die zu dieser Gruppe gehören, sind zum Beispiel: Kaneka XMAP SA (e.g. Kaneka XMAP SA100).

Am meisten bevorzugt für das injizierfähige thermische Kontakt- und Füllmaterial ist das Prepolymer der Formel B-1: 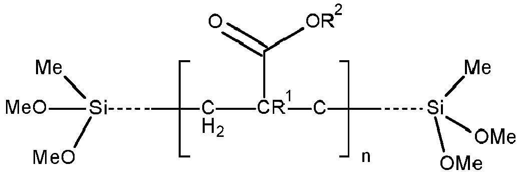
R¹ ist H, C₁-C₆-alkyl;
R² ist H, C₁-C₆-alkyl

### - Gruppe C

Die Gruppe C umfasst Prepolymere, in denen der Polymerbackbone selbst aus einem PU-Prepolymer besteht und somit Urethangruppen enthält. Die verwendeten Polyole im Backbone können jeweils wie gezeigt aus Polyetherpolyolen bestehen, aber auch andere "Polyole" sind möglich.

Diese Prepolymere sind unter folgenden chemischen Namen bekannt: silane-terminated polyurethane (SPU or STPU), silane-terminated PU, silane-modified PU.

Kommerziell erhältliche Prepolymere, die zu dieser Gruppe gehören, sind zum Beispiel: Polymer ST (e.g. Polymer ST 44) und Geniosil STP-E (e.g. Geniosil STP-E30)

Am meisten bevorzugt für das injizierfähige thermische Kontakt- und Füllmaterial ist das Prepolymer der Formel C-1:

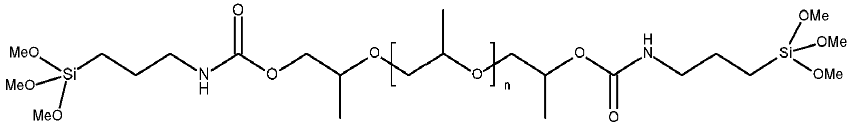

Eine weitere vorteilhafte Weiterbildung des injizierfähigen thermischen Kontakt- und Füllmaterials sieht vor, dass ein oder mehrere silanfunktionalisierte Prepolymere aus der folgenden Gruppe ausgewählt werden:
SAX 350 (Gruppe A)
XMAP SA120S (Gruppe B).
Polymer ST-61 LV (Gruppe C).

Eine weitere besonders vorteilhafte Weiterbildung des injizierfähigen thermischen Kontakt- und Füllmaterials sieht vor, dass die Komponente A ausschließlich ein silanfunktionalisiertes Prepolymer aufweist, das ein silanfunktionalisiertes Prepolymer der Gruppe C, bevorzugt ST-61 LV, ist.

Eine weitere vorteilhafte Weiterbildung des injizierfähigen thermischen Kontakt- und Füllmaterials sieht vor, dass der Weichmacher ein mehrfachfunktioneller Carbonsäureester ist.

Im Sinne der vorliegenden Erfindung können als Weichmacher Phthalsäureester wie z.B. Diethylhexylphthalat oder Dioctylphthalat verwendet werden, wobei Phthalsäureester aufgrund ihrer teilweise schädlichen Wirkung auf den Menschen momentan auf der Kandidatenliste der besonders besorgniserregenden Stoffe der ECHA, SVHC-Liste stehen. Als Ersatz für die Phthalsäureester können Alkylsulfonsäureester als auch zitronensäurebasierte Weichmacher, z.B. Zitronensäuretriethylester oder Adipinsäurebasierte Weichmacher, beispielsweise Diethylhexyladipat oder Diethyloxtyladipat, verwendet werden.

Die Auswahl des entsprechenden Weichmachers soll basierend auf deren Funktion bei dem erfindungsgemäßen injizierfähigen thermischen Kontakt- und Füllmaterial getroffen werden, wobei es anzumerken ist, diese nicht alle Deckungsgleich mit der Verwendung von Weichmacher in anderen Formulierungen sind. In dem erfindungsgemäßen injizierfähigen thermischen Kontakt- und Füllmaterial hat der Weichmacher folgende Aufgaben:

### - Erniedrigung der Viskosität der Flüssigkomponenten

Typischerweise sind silylfunktionalisierte Prepolymere höherviskose Rohstoffe, auch wenn man typischerweise niedrigviskose Systeme zur Formulierung der Rezeptur auswählt. Trotz allem hängt der erreichbare Füllgrad mit den thermisch leitfähigen Füllstoffen direkt mit der Mischviskosität der Flüssigkomponenten zusammen. Aus diesem Grund alleine sind niedrigviskose Zuschläge notwendig, welche die Mischviskosität der Flüssiganteile so weit wie möglich erniedrigen, um die notwenigen Füllgrade mit den thermisch leitfähigen Füllstoffen zu erreichen, ohne die Viskosität der fertigen Formulierung zu hoch für die Anwendung werden zu lassen.

### - Erhöhung der Flexibilität im ausgehärteten Material

Durch den sehr hohen Füllstoffanteil verliert das Polymernetzwerk an Freiheitsgraden und die im ungefüllten Zustand sehr flexible Matrix mit hoher Bruchdehnung wird immer unflexibler und die Bruchdehnung sinkt typischerweise auf sehr niedrige Werte. Durch die Verwendung des Weichmachers erfolgt zum einen eine bessere interne Benetzung des Füllstoffs, indem sich die Weichmachermoleküle nicht nur wie oben definiert zwischen den Polymerketten anlagern, sondern idealerweise auch zwischen den Füllstoffpartikeln und den Polymerketten eine Kompatibilitätsschicht bilden und zusätzlich so den Freiheitsgrad, der durch die Füllstoffpartikel stark eingeengten Polymerketten stark erhöht.

Typischerweise haben silanfunktionalisierte Prepolymere eine hohe Molekularmasse, meist durch den langen (pre-)polymeren Backbone. Durch diesen Backbone werden die Vernetzungspunkte stark voneinander getrennt, so dass ein weitmaschiges, flexibles Netzwerk entsteht, welches z.B. für flexible Klebstoffe und/oder Dichtmassen geeignet ist. Wie im ersten Punkt dargelegt, ist die Viskosität dieser silanfunktionalisierten Prepolymere von extremer Wichtigkeit für die Anwendung, so dass nur niedrigviskose Typen überhaupt für die Anwendung vollumfänglich in Frage kommen. Da jedoch ein höhermoleukularer Backbone auch mit einem Viskositätsanstieg des Prepolymers einhergeht sind typischerweise niedrigmolekularere silanfunktionalisierte Prepolymere für die Anwendung geeignet. Diese gehen natürlich auch mit einer höheren Vernetzungsdichte und folglich mit einer höheren Mechanik, niedrigeren Flexibilität einher, welche durch den im obigen Punkt dargestellten Effekt des hohen Füllgrades noch verstärkt wird. Dies versucht man durch den Einsatz von Weichmacher auszugleichen, indem man den definierten "Weichmachereeffekt" zwischen den ausgehärteten Prepolymeren und zusätzlich den Füllstoffpartikeln ausnutzt (siehe zweiter Punkt), aber auch indem man den Volumenanteil an eingesetztem Prepolymer auf ein Minimum reduziert. Dies kann natürlich dazu führen, dass sich ein nichtvollständig ausgebildetes Polymernetzwerk ausbildet, indem nicht alle Polymerketten vollständig vernetzt vorliegen. Dies resultiert in einem weitmaschiger aufgespannten Polymernetzwerk, welches die Nachteile der verwendeten niedrigmolekularen silanfunktionalisierten Prepolymere zumindest teilweise aufhebt und das Netzwerk flexibler, niedrigmoduliger und auf eine niedrigere Mechanik trimmt, wie es auch die Verwendung von langkettigen, silanfunktionalisierten Prepolymeren ermöglichen würde.

In Anbetracht der oben genannten Ausführungen haben sich für das erfindungsgemäße injizierfähige thermische Kontakt- und Füllmaterial haben sich als besonders geeignet folgende Weichmacher erwiesen:
Oxsoft 3G8: CAS 94-28-0
   - Triethylenglykol-di-(2-ethylhexanoat)
   - 2,2'-Ethylendioxydiethylbis(2-ethylhexanoat)
Cereplas L810TM: CAS 90218-76-1
   - 1,2,4-Benzoltricarbonsäure, gemischter Decyl- und Octyltriester
Oxsoft TOTM LE: CAS 3319-31-1
   - Tris(2-ethylhexyl)benzol-1,2,4-tricarboxylat
   - Trioctyltrimellitat.

Am meisten bevorzugt sind di-, tri- oder mehrfunktionelle Carbonsäureester. Eine weitere besonders vorteilhafte Weiterbildung des injizierfähigen thermischen Kontakt- und Füllmaterials sieht vor, dass Oxsoft 3G8 als Weichmacher verwendet wird.

Eine weitere vorteilhafte Weiterbildung des injizierfähigen thermischen Kontakt- und Füllmaterials sieht vor, dass das Netz- und Dispergieradditiv zumindest funktionelle aminische Gruppen aufweist, welches auch optional saure Gruppen, z.B. Phosphorgruppen oder Carboxylatgruppen enthalten kann.

Besonders bevorzugt sind: Disperbyk 2157 oder Byk W969.

Die Gemeinsamkeiten von Disperbyk 2157 und Byk W969 belaufen sich auf gemeinsame aminische Gruppen, welche mindestens durch das Vorhandensein einer Aminzahl nach DIN 16945 im Netz- und Dispergieradditiv definiert ist. Natürlich können optional weitere funktionelle Gruppen, wie Phosphorgruppen oder Carboxylatgruppen enthalten sein, welche auch noch oberflächenaktiv wirken können. Optional können die Netz- und Dispergieradditive zusätzlich eine Säurezahl gemessen nach DIN EN ISO 2114 enthalten.

Als besonders relevant werden Netz- und Dispergieradditive benannt, welche mindestens eine Aminzahl von >20 mg KOH/g aufweisen und welche optional zusätzlich eine Säurezahl aufweisen können.

Eine weitere vorteilhafte Weiterbildung des injizierfähigen thermischen Kontakt- und Füllmaterials sieht vor, dass die Komponente A eine Mischung aus funktionaliserten Organosilanen aufweist.

Im Sinne der vorliegenden Erfindung sind hier mono- und multifunktionelle Organosilane zu verstehen. Die multifunktionelle Oranosilane, welche als oligomere oder vorkondensierte Silane vorliegen und somit in oligomerer Form aufgrund der hohen Funktionalitätsdichte schneller reagieren können, als auch die lokale Vernetzungsdichte des aushärtenden Polymers stärker erhöhen oder auch eine bessere Anbindung des Klebstoffs an Oberflächen ermöglichen.

Zuerst dienen alle genannten Organosilane als Vernetzer. Sie werden in das in das Netzwerk der silanfunktionalisierten Prepolymere eingebaut und damit erhöhen sie die Vernetzungsdichte das Prepolymere. Die funktionellen Gruppen, die sie enthalten, sind ausschlaggebend für die Funktion in einer Formulierung.

Eine weitere vorteilhafte Weiterbildung des injizierfähigen thermischen Kontakt- und Füllmaterials sieht vor, dass folgende Organosilane verwendet werden:

In den Formulierungen relevant sind folgende Organosilane inkl. Funktionsweise:

### a) aminofunktionnalisierte Organosilane

Sie haben generell eine beschleunigende Wirkung auf die Silankondensationsreaktion und werden neben den generellen Eigenschaften als Co-Katalysator mit eingesetzt. Des Weiteren haben sie ähnlich wie epoxyfunktionelle Organosilane eine haftungsverbessernde Wirkung für verschiedene Substrate.

Eine weitere besonders vorteilhafte Weiterbildung des injizierfähigen thermischen Kontakt- und Füllmaterials sieht vor, dass:
- AMMO oder
- Oligomere, vorkondensierte Silane mit Amingruppen, z.B. aus der Reihe Dynasylan^{®} SIVO
verwendet werden.

### b) vinylfunktionelle Organosilane

Sie haben vorwiegend eine trocknende Wirkung. Die im Produktionsverfahren eingesetzten Füllstoffe und Weichmacher haben eine bestimmte Restfeucht bzw. Wassergehalt, der zwar sehr niedrig ist, jedoch die Lagerstabilität der Silanfunktionalisierten Prepolymere negativ beeinflusst, indem eine ungewollte Silankondensation über die Zeit stattfindet, was zu einer starken Viskositätserhöhung und damit zu einer Verminderung der Applikationseigenschaften führen kann. Um es zu trocknen, werden die vinylfunktionellen Organosilane der Formulierung hinzugefügt und so werden die Füllstoffe und andere Formulierungsbestandteile *in situ* getrocknet. Der kleine Anteil an unreaktiven vinylfunktionellen Organosilane verbleibt in der Formulierung und ermöglicht so eine praktikable Lagerstabilität der Formulierung ohne Spezialequipment, wie Produktion und Überlagerung der Komponenten unter Inertgas, Vortrocknung der Füllstoffe in speziellen Trocknern.

Eine weitere besonders vorteilhafte Weiterbildung des injizierfähigen thermischen Kontakt- und Füllmaterials sieht vor, dass VTMO verwendet wird.

### c) epoxyfunktionelle Organosilane

Neben den generell beschriebenen Eigenschaften hat das Epoxysilan weitere interessante Eigenschaften, für die es in die Formulierungen zugesetzt wird. Zum einen können epoxy- und aminfunktionelle Silane miteinander reagieren (neben der Silankondensation) und so auch Querverbindungen schaffen. Des weiteren sind Epoxysilane für ihre guten haftverbessernden Eigenschaften auf einer ganzen Reihe von verschiedenen Oberflächenchemien bekannt (von polymeren Oberflächen bis hin zu metallischen Oberflächen) und hilft so ein ausgeglichenes Produkteigenschaftenprofil zu erreichen.

Eine weitere besonders vorteilhafte Weiterbildung des injizierfähigen thermischen Kontakt- und Füllmaterials sieht vor, dass die Mischung der funktionalisierten Organosilanen zumindest einen aminofunktionalisierten oder einen vinylfunktionalisierten oder einen epoxyfunktionalisierten Organosilan aufweist.

Eine weitere besonders vorteilhafte Weiterbildung des injizierfähigen thermischen Kontakt- und Füllmaterials sieht vor, dass die Mischung der funktionalisierten Organosilanen zumindest zwei Organosilane umfasst, die ausgewählt sind aus der Gruppe bestehend aus: einem aminofunktionalisierten, einen vinylfunktionalisierten und einem epoxyfunktionalisierten Organosilan.

Eine weitere besonders vorteilhafte Weiterbildung des injizierfähigen thermischen Kontakt- und Füllmaterials sieht vor, dass die Mischung der funktionalisierten Organosilanen zumindest einen aminofunktionalisierten und einen vinylfunktionalisierten Organosilan aufweist.

Eine weitere besonders vorteilhafte Weiterbildung des injizierfähigen thermischen Kontakt- und Füllmaterials sieht vor, dass die Mischung der funktionalisierten Organosilanen einem aminofunktionalisierten, einen vinylfunktionalisierten und einem epoxyfunktionalisierten Organosilan aufweist.

Eine weitere besonders vorteilhafte Weiterbildung des injizierfähigen thermischen Kontakt- und Füllmaterials sieht vor, dass mindestens eines der funktionaliserten Organosilane ein oligomeres Silan ist.

Eine weitere besonders vorteilhafte Weiterbildung des injizierfähigen thermischen Kontakt- und Füllmaterials sieht vor, dass GLYMO verwendet wird.

Eine weitere besonders vorteilhafte Weiterbildung des injizierfähigen thermischen Kontakt- und Füllmaterials sieht vor, dass zwingend Zinkoxid als Füllstoff verwendet wird.

Eine weitere vorteilhafte Weiterbildung des injizierfähigen thermischen Kontakt- und Füllmaterials sieht vor, dass zusätzlich zu ZnO ein wärmeleitfähiger Füllstoff verwendet wird, der ausgewählt ist aus Gruppe bestehend aus: Al(OH)₃, Al₂O₃.

Eine weitere vorteilhafte Weiterbildung des injizierfähigen thermischen Kontakt- und Füllmaterials sieht vor, dass die Gesamtmenge der Füllstoffe in den Komponenten A und B 80 bis 95 Gew.-%, bevorzugt 88 bis 93 Gew.-%, noch mehr bevorzugt 88 bis 90 Gew.-% beträgt, wobei der Anteil an ZnO in der Mischung der Füllstoffe dementsprechend 10 bis 30 Gew.-%, bevorzugt 15 bis 25 Gew.-% noch mehr bevorzugt 15 bis 20 Gew.-% beträgt.

Eine weitere vorteilhafte Weiterbildung des injizierfähigen thermischen Kontakt- und Füllmaterials sieht vor, dass zumindest einer der wärmeleitfähigen Füllstoffe eine Oberflächenbeschichtung und /oder Oberflächenfunktionalisierung aufweist, die vorzugsweise hydrophob ist.

Wie es bekannt ist, reagieren silanfunktionalisierte Prepolymere in einer Kondensationsreaktion und Anwesenheit von Wasser. Das Wasser für diese Reaktion wird üblicherweise vorwiegend durch die Füllstoffe eingetragen. Wie oben detailliert beschrieben, sind diese aufgrund der Luftfeuchtigkeit oberflächlich zumindest teilweise mit Wasser belegt. Ferner speichern die Füllstoffpartikel durch Poren- und Kapillareffekte das Wasser in Poren und Rissen.

Die Füllstoffe können durch die Zugabe von vinylfunktionellen Organosilanen getrocknet werden, wie eine Ausgestaltung der vorliegenden Erfindung es vorsieht. In solchen Fall muss jedoch die benötigte Menge an dem vinylfunktionellen Organosilan je nach Wassergehalt der Füllstoffe angepasst werden. Wenn die Füllstoffe nicht ausreichend getrocknet werden, wird dadurch die Lagerstabilität der fertig formulierten Komponente durch einen langsamen Viskositätsanstieg der Flüssigkomponente beeinflusst, der vor allem aufgrund beginnender langsamer Kondensationsreaktionen der Polymere stattfindet.

Dies kann man formulatorisch umgehen, indem man Füllstoffe einsetzt, die teilweise hydrophobisiert sind. Hydrophobisierung von Füllstoffen ist ein großindustriell angewendeter Prozess, indem die Füllstoffe so gut wie möglich mit oberflächenaktiven Molekülen oder Polymeren beschichtet werden. Hierfür werden in Abhängigkeit von dem Füllstoff beispielsweise Fettsäuren, Organosilane, Organotitanate, funktionalisierte oder unfunktionalisierte Polymere eingesetzt, so dass sowohl eine Chemisorption, als auch eine Physisorption dieser Beschichtungsadditive an der Oberfläche eine praktikable Möglichkeit der Oberflächenfunktionalisierung darstellt.

Diese sehr dünne Beschichtung macht die Füllstoffoberflächen hydrophober, so dass nur ein weit geringerer Anteil an Wasser aus der Luftfeuchtigkeit sich an die Füllstoffe anlagern kann und die Füllstoffe somit eine geringere Restfeuchtigkeit enthalten. Dies führt dazu, dass bei einer optimalen Auswahl dieser Beschichtungsagenzien ähnliche Effekte erzielt werden, wie mit den beschriebenen Netz- und Dispergieradditiven, die man in solchen Fall nicht benötigt.

Eine weitere vorteilhafte Weiterbildung des injizierfähigen thermischen Kontakt- und Füllmaterials sieht vor, dass die Komponente B einen Katalysator aufweist.

Eine weitere besonders vorteilhafte Weiterbildung des injizierfähigen thermischen Kontakt- und Füllmaterials sieht vor, dass der Katalysator ein metallorganischer Komplex ist. In Frage kommen alle gängigen auf dem Markt zugänglichen Organometall-Katalysatoren. Als Beispiel werden hier die Zinn-Komplexe genannt, wobei diese Erfindung nicht auf diese beschränkt ist. Als geeignete Katalysatoren werden hier folgende bevorzugt: Dibutylzinndilaurat (DBTL), Dioctylzinndilaurat, dessen Oxide wie Dibutylzinnoxid, Dioctylzinnoxid oder andere Zinn-Komplexe mit zusätzlich ausgetauschten Liganden wie z.B. Dioctylzinn Diacetylacetonat oder auch Dioxtylzinn/Dibutylzinn-Silankomplexe.

Eine weitere besonders vorteilhafte Weiterbildung des injizierfähigen thermischen Kontakt- und Füllmaterials sieht vor, dass der Katalysator eine Co-Katalysatoren Base wie z.B. Amine als Protonenakzeptoren sein kann. Diese werden typischerweise als aminofunktionelle Organosilane in der Formulierung eingesetzt und sind unter der Beschreibung der Organosilane zusammengefasst.

Eine weitere besonders vorteilhafte Weiterbildung des injizierfähigen thermischen Kontakt- und Füllmaterials sieht vor, dass der Katalysator ein säurekatalysiertes System ist.

Eine weitere besonders vorteilhafte Weiterbildung des injizierfähigen thermischen Kontakt- und Füllmaterials sieht vor, dass es silikonfrei ist.

Diese Maßnahme hat den Vorteil, dass dadurch sichergestellt wird, dass in dem System keine flüchtigen Silikonverbindungen auf Oberflächen, welche die aktiven Komponenten umgeben, abgelagert werden. Damit wird vermieden, dass zum einen die Haftung der Lack- oder Klebschichten der kontaminierten Oberflächen beeinträchtigt wird. Zum anderen werden auch die elektrischen Kontakte dadurch geschützt.

Die Erfindung wird nachfolgend durch Beispiele illustriert, wobei sie nicht auf diese beschränkt ist.

### Beispiel 1 - Herstellung der Komponente A und der Komponente B

Die in der Tabelle 1 genannten Rohstoffe wurden in einem Speedmixerbecher eingewogen und 30 Sekunden bei einer Drehzahl von 2000 rpm (revolutions per minute = Umdrehungen pro Minute) vorgemischt, sodass eine homogene Zusammensetzung entsteht. Anschließend wurde die Zusammensetzung für 3 Minuten bei 900 rpm am Vakuumspeedmixer entgast. Alle der oben genannten Zusammensetzungen wurden wie oben beschrieben hergestellt.

Wie der Tabelle 1 zu entnehmen ist, unterscheiden sie sich die Zusammensetzungen F1 bis F4 ausschließlich in der Art der verwendeten Füllstoffe. Die Zusammensetzungen F1 und F2 beinhalten die gleichen Füllstoffe um der gleichen Menge, wobei V2 zusätzlich noch Fumed Silica aufweist, bei dem es sich um sin synthetisch hergestelltes, kolloides Material mit definierten Eigenschaften und Teilchengröße handelt, welches als Füllstoff verwendet wird. Es besteht vollständig aus amorphen Siliciumdioxid-Partikeln (SiO₂), die zu größeren Einheiten aggregiert sind. Die Zusammensetzungen F3 und F4 dagegen weisen die gleichen Füllstoffe in unterschiedlichen Mengen.

**Tabelle 1 - Komponente A**

| Rohstoff | | **F1** | **F2** (= F1 +1,5% R202 | **F3** | **F4** |
|---|---|---|---|---|---|
| Polymer | | 1,6 | 1,6 | 1,6 | 1,6 |
| Weichmacher | | 6,4 | 6,4 | 6,4 | 6,4 |
| Dispergieradditiv | Byk | 1 | 1 | 1 | 1 |
| Silan 1 | GLYMO | 0,3 | 0,3 | 0,3 | 0,3 |
| Silan 2 | VTMO | 0,6 | 0,6 | 0,6 | 0,6 |
| Silan 3 | AMMO | 0,1 | 0,1 | 0,1 | 0,1 |
| Füllstoff 1 | ZnO (D90 <45µm) | 15 | 15 | 0 | 0 |
| Füllstoff 2 | Al(OH)₃ (D90 <45µm) | 27 | 27 | 32 | 63 |
| Füllstoff 3 | Al₂O₃ (D90 <150µm) | 48 | 48 | 58 | 27 |
| Fumed Silica | | | 1,5 | | |
| Summe | | 100,00 | 101,5 | 100 | 100 |

**Tabelle 2 - Komponente B**

| Die in der Tabelle 2 genannten Rohstoffe wurden in einem Speedmixerbecher eingewogen und 30 Sekunden bei einer Drehzahl von 2000 rpm (revolutions per minute = Umdrehungen pro Minute) vorgemischt, sodass eine homogene Zusammensetzung entsteht. Anschließend wurde die Zusammensetzung für 3 Minuten bei 900 rpm am Vakuumspeedmixer entgast. Alle der oben genannten Zusammensetzungen wurden wie oben beschrieben hergestellt. | | |
|---|---|---|
| Rohstoff | | |
| Weichmacher | | 12 |
| Dispergieradditiv | Byk | 3 |
| Füllstoff 2 | Al(OH)₃ (D90 <45µm) | 81 |
| Wasser | | 2 |
| Organozinnkatalysator | | 2 |
| Summe | | 100,00 |

Das Mischungsverhältnis der Komponenten A zu B ist 10:1 nach Volumen. Bei der Komponente B handelt es sich um eine so genannte Boosterkomponente, die zwei Effekte bringt:
- Zum einen den homogenen Eintrag von Feuchtigkeit in die Komponente A, so dass diese homogen aushärtet. Ohne Komponente B würde die Komponente A in Kontakt mit Luftfeuchtigkeit von außen nach innen aushärten. Aufgrund der sehr langen Diffusionswege, die sich bei einer typischen, großflächigen Aufbringung innerhalb eines Moduls ergeben und der sehr geringen Kontaktfläche der A-Komponente alleine mit der umgebenden Luft, würden Teile der Komponente über sehr lange Zeit unausgehärtet in der Mitte des großflächig eingebrachten injizierfähigen thermischen Kontakt- und Füllmaterials verbleiben.
- Zum anderen beschleunigt die Zugabe des Katalysators die Kondensationsreaktion der Silanfunktionalitäten.

### Experiment 1 - Untersuchung des Absetzverhaltens, der Viskosität und der Extrusionsfähigkeit

Das Absetzverhalten wurde alleine aus der Formulierung der Komponente A ermittelt, da die Sedimentationsproblematik um einiges größer ist bei der A-Komponente und dies die reaktive Komponente darstellt. Demnach wurde hier auf eine Darstellung der Komponente B verzichtet. Diese wäre unreaktiv und enthält das benötigte Wasser und einen Katalysator für eine beschleunigte Aushärtung des erfindungsgemäßen Kontakt- und Füllmaterials.

Nach Herstellung der Komponenten A, entweder als 100g oder 500g Ansatz wurde die Viskosität der Zusammensetzungen F1 bis F4 direkt nach Herstellung gemessen. Die Ergebnisse sind in der Tabelle 2, Zeile 1 und 1 zusammengefasst:

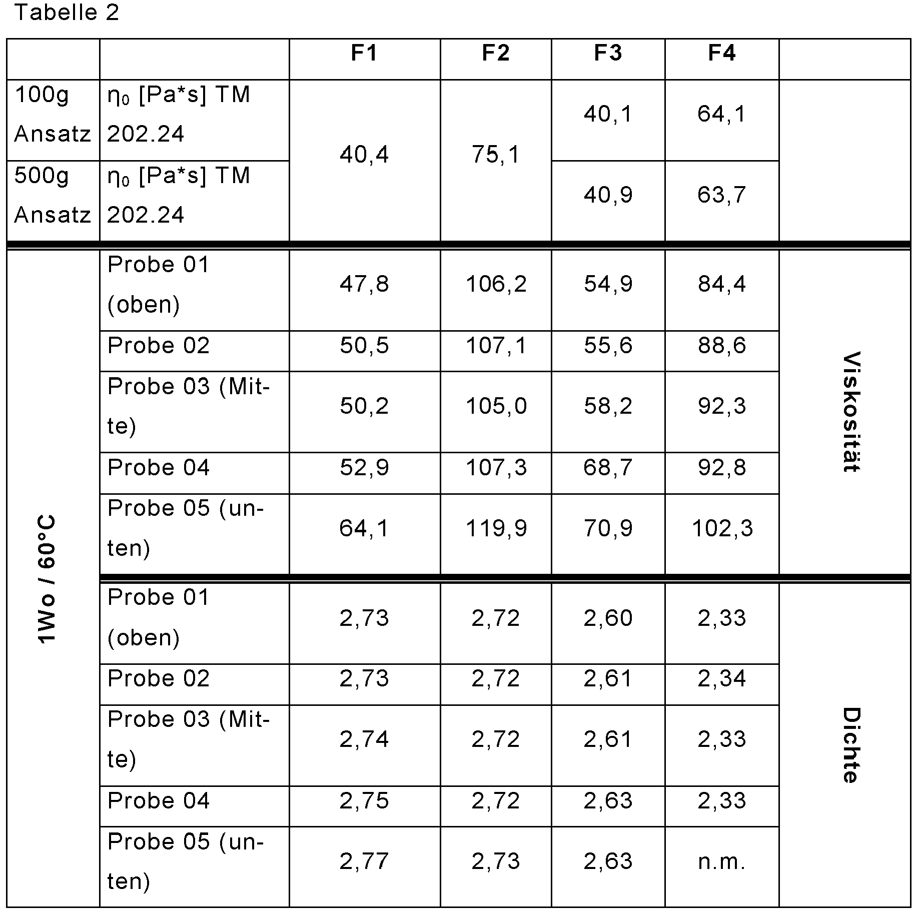

Wie man sieht, zeigen die Zusammensetzungen F1 und F3, die sich in Verwendung von ZnO unterscheiden (s. Tabelle 1) fast die gleiche Viskosität direkt nach der Herstellung.

Die Zusammensetzungen F1 bist F4 wurden anschließend in die Kartuschen umgefüllt und eine Woche bei 60°C stehend, d.h. aufrecht, gelagert. Dadurch wurden Alterungs- und Sedimentationsvorgänge während der Lagerung und Transport im Schnellverfahren simuliert. Nach einer Woche bei 60°C wurde das Absetzverhalten der Zusammensetzungen F1 bis F4 bestimmt, indem die Viskosität und die Dichte abschnittsweise in den Kartuschen der jeweiligen Zusammensetzungen bestimmt wurden. Hierzu wurden die Kartuschen in 5 Volumenabschnitte unterteilt und es wurden die entsprechenden Proben entnommen. Hierzu ist anzumerken, dass "Probe 1" direkt aus dem oberen Teil der Kartusche, "Probe 3" aus dem mittleren Volumenabschnitt und "Probe 5" ganz unten in der Kartusche entnommen wurde. Die Proben 2 und 4 sind insofern Zwischenmessungen im Volumenbereich oberhalb/unterhalb der Mitte der jeweiligen Kartusche.

Die Viskosität der entnommenen Proben wurde auf einem Platte-Platte Rheometer bei einer Scherrate von 10s-1 gemessen. Die Dichte wurde aufgrund der sehr hohen Viskosität der Zusammensetzungen in einem kleinen Plastikbecher mit ca. 2 ml Inhalt durchgeführt. Das Volumen des Bechers wurde vor Messung der Dichte durch Vollständiges Auffüllen mit Wasser und Rückwaage bestimmt und nach Trocknung des Bechers dieser Blasenfrei mit der jeweiligen Komponente gefüllt, überstehendes Material bündig zum Becherrand abgezogen und der gefüllte Becher zurückgewogen und die Dichte aus der Masse der Komponente und dem genauen Volumen des Bechers berechnet. Durch das Ausdrücken der Kartusche wurde auch die Extrusionsfähigkeit aus der Kartusche evaluiert und als Eindruck festgehalten.

Wie man den Ergebnissen der Tabelle 2 entnehmen kann, ist die Entwicklung der Viskosität der Zusammensetzung V1 vergleichbar mit den ReferenzformulierungenF2 bis F4. Ein Absetzverhalten, verbunden mit einem Viskositätsanstieg von 20-30% des unteren Volumenabschnitts im Vergleich mit dem oberen Volumenabschnitt wurde bei allen Formulierungen festgestellt, was sich auch in einem Dichteanstieg im unteren Teil der Kartusche korrelieren läßt, obwohl dieser weniger stark ausgeprägt ist. Bei der Formulierung F4 war der untere Bereich aufgrund stärkerer Sedimentation nicht mehr gut messbar, da eine blasenfreie Überführung in den Messbecher unmöglich war.

Es wurde jedoch ein erheblicher Unterschied in der Extrusionsfähigkeit zwischen der Zusammensetzung V1 und den Zusammensetzungen V3 und V4, die beide letzten ohne Zubage von ZnO, beobachtet. Dies ist eine klare Indikation auf die deutlich verbesserte Injizierfähigkeit der Zusammensetzung V1, die auf den Zusatz von ZnO zurückzuführen ist.

Hier wirkten im direkten Vergleich die Zusammensetzungen V3 und V4 viel zu zäh und waren nur sehr schlecht zu fördern. Selbst bei der Zusammensetzung V2, die die Zusammensetzung 1 ist, zu der 1.5% Fumed Silica hinzugefügt wurde, um eine höhere Viskosität zu erreichen wurde ein vielfach verbesserte Extrusionsfähigkeit festgestellt, wie bei den Vergleichsformulierungen V3 und V4.

### Experiment 2 - Untersuchung der Injektionsfähigkeit

Für dieses Experiment wurde die Zusammensetzung V1, die die beste Extrusionsfähigkeit zeigte, mit der Zusammensetzung F3, die kein ZnO beinhaltet, verglichen.

Injektionstests wurden an einem Metalldummy mit aufgeschraubtem Plexiglasdeckel durchgeführt, um die Wanderung der Injektionsfront auf Video festzuhalten und eine Injektionszeit festzustellen. Die Spaltbreite beträgt 1 mm, das Injektionsvolumen ca. 85 ml und die Dimensionen der Kavität zur Injektion 450mm x 195mm x 1mm

Der Plexiglasdeckel wurde mit einer Dichtung in dem Randbereich abgedichtet. Die Plexiglasscheibe enthält ein Loch zum Injizieren und eine Aussparung des Dichtgummis zum Entweichen der Luft und Austrag des überschüssigen Injektionsmaterials nach Durchführung des Tests auf der gegenüberliegenden Seite des Injektionsvolumens. Die Plexiglasscheibe wurde mit Zwei Klebebändern unterteilt in gleichmäßige Injektionsflächen à 1/3, 2/3 und volle Injektionslänge, um so auch Zwischenwerte der Injektionszeiten reproduzierbar aufnehmen zu können.

Zuerst wurden die Zusammensetzungen V1 und V3, die ausschließlich die Komponente A umfassen, wie in der Tabelle 1 dargestellt, hergestellt. Diese wurden anschließend mit der B-Komponente in einem Verhältnis 10:1 in jeweils eine Kartusche blasenfrei überführt und mit einem Statikmischer (10-24T-MFHX) versehen. Die Injektion der Zusammensetzungen V1 + Komponente B und V3 und Komponente B erfolgte über ein Loch durch die Plexiglasscheibe mittels einer pneumatischen Kartuschenpistole. Der Pneumatikdruck wurde auf den Maximalwert von 6 bar eingestellt. Umgebungs- und Materialtemperatur betrug Labortemperatur (ca. 23°C).

Die Ergebnisse sind in der Tabelle 3 zusammengefasst:

**Tebelle 3**

| Injektionszeit bis | 1/3 Weglänge gefüllt | 2/3 Weglänge gefüllt | Gesamte Weglänge gefüllt |
|---|---|---|---|
| V1 + Komponente B | 0:43 min | 1:44 min | 2:36 min |
| V3 + Komponente B | 2:40 min | Nicht messbar | Nicht messbar |

Die Injektion der Zusammensetzung V3 + Komponente B wurde nach 3:00 Injektionszeit abgebrochen. Aufgrund der sehr viel höheren Viskosität und schlechteren Fließfähigkeit wurde keine vollständige Injektion mit der Katuschenpistole erreicht, da der maximale Pneumatikdruck für die Injektion nicht ausreichend war und zusätzlich aufgrund des Druckaufbaus die Gefahr eines Berstens der Plexiglasplatte bestand. Im Gegenteil dazu lässt sich die erfindungsgemäße Injizierfähiges thermisches Kontakt- und Füllmaterial (V1 + Komponente B) sehr schnell und einfach injizieren.

## Patentansprüche

1. Injizierfähiges thermisches Kontakt- und Füllmaterial, das aus einer Komponente A und einer Komponente B besteht, wobei
die Komponente A folgendes aufweist:
1.A) ein silanfunktionalisiertes Prepolymer oder eine Mischung von silanfunktionalisierten Prepolymeren, wobei das silanfunktionalisierte Prepolymer auf Polyurethane, Polyol / Diol oder Polyacrylate basiert;
2.A) einen Weichmacher, der ein mehrfachfunktioneller Carbonsäureester ist;
3.A) ein Netz- und Dispergieradditiv aufweisend zumindest eine Aminzahl grö-βer >20 mg KOH/g gemessen nach DIN 19645;
4.A) eine Mischung aus funktionalisierten Organosilanen;
5.A) ZnO und einen weiteren wärmeleitfähigen Füllstoff oder ein Gemisch aus mehreren wärmeleitfähigen Füllstoffen; und wobei
die Komponente B folgendes aufweist:
1.B) einen Weichmacher, der ein mehrfachfunktioneller Carbonsäureester ist;
2.B) ein Netz- und Dispergieradditiv aufweisend zumindest eine Aminzahl grö-βer >20 mg KOH/g gemessen nach DIN 19645;
3.B) einen wärmeleitfähigen Füllstoff oder ein Gemisch aus mehreren wärmeleitfähigen Füllstoffen;
4.B) Wasser; und
5.B) einen Organometall-Katalysator; und wobei
das Mischungsverhältnis nach Volumen der Komponente A zur Komponente B 1:1 bis 10:1 beträgt.

2. Injizierfähiges thermisches Kontakt- und Füllmaterial nach Anspruch 1, **dadurch gekennzeichnet, dass** die Komponente A ausschließlich ein auf Polyurethane basierendes silanfunktionalisiertes Prepolymer aufweist.

3. Injizierfähiges thermisches Kontakt- und Füllmaterial nach Anspruch 1 oder 2, **dadurch gekennzeichnet, dass** der Weichmacher ein difunktioneller Carbonsäureester ist.

4. Injizierfähiges thermisches Kontakt- und Füllmaterial nach Anspruch 3, **dadurch gekennzeichnet, dass** der Weichmacher ein difunktioneller Carbonsäureester ist, der auf einem Polyetheralkohol basiert.

5. Injizierfähiges thermisches Kontakt- und Füllmaterial nach einem der Ansprüche 1 bis 4, **dadurch gekennzeichnet, dass** die Mischung der funktionalisierten Organosilanen zumindest einen aminofunktionalisierten oder einen vinylfunktionalisierten oder einen epoxyfunktionalisierten Organosilan aufweist.

6. Injizierfähiges thermisches Kontakt- und Füllmaterial nach einem der Ansprüche 1 bis 4, **dadurch gekennzeichnet, dass** die Mischung der funktionalisierten Organosilanen zumindest zwei Organosilane umfasst, die ausgewählt sind aus der Gruppe bestehend aus: einem aminofunktionalisierten, einen vinylfunktionalisierten und einem epoxyfunktionalisierten Organosilan.

7. Injizierfähiges Kontakt- und Füllmaterial nach einem der Ansprüche 1 bis 6, **dadurch gekennzeichnet, dass** mindestens eines der funktionaliserten Organosilane ein oligomeres Silan ist.

8. Injizierfähiges Kontakt- und Füllmaterial nach einem der Ansprüche 1 bis 7, **dadurch gekennzeichnet, dass** der wärmeleitfähige Füllstoff ausgewählt ist aus Gruppe bestehend aus: Al(OH)₃ und Al₂O₃.

9. Injizierfähiges thermisches Kontakt- und Füllmaterial nach einem der Ansprüche 1 bis 8, **dadurch gekennzeichnet, dass** die Mischung der wärmeleitfähigen Füllstoffe Al(OH)₃ und Al₂O₃ aufweist.

10. Injizierfähiges thermisches Kontakt- und Füllmaterial nach einem der Ansprüche 1 bis 9, **dadurch gekennzeichnet, dass** zumindest einer der wärmeleitfähigen Füllstoffe eine Oberflächenbeschichtung und /oder Oberflächenfunktionalisierung aufweist.

11. Injizierfähiges thermisches Kontakt- und Füllmaterial nach einem der Ansprüche 1 bis 10, **dadurch gekennzeichnet, dass** die Gesamtmenge der Füllstoffe in den Komponenten A und B 80 bis 95 Gew.-% beträgt, wobei der Anteil an ZnO in der Mischung der Füllstoffe 10 bis 30 Gew.-% beträgt.

12. Injizierfähiges thermisches Kontakt- und Füllmaterial nach einem der Ansprüche 1 bis 11, **dadurch gekennzeichnet, dass** die Gesamtmenge der Füllstoffe in den Komponenten A und B 88 bis 93 Gew.-% beträgt, wobei der Anteil an ZnO in der Mischung der Füllstoffe 15-25 Gew.-% beträgt.

13. Injizierfähiges thermisches Kontakt- und Füllmaterial nach einem der Ansprüche 1 bis 12, **dadurch gekennzeichnet, dass** es folgendes aufweist:
1 bis 10 Gew.-% der Mischung von silanfunktionalisierten Prepolymeren, wobei das silanfunktionalisierte Prepolymer basierend auf Polyurethanen bis zu 50 Gew.-% ausmacht,
3 bis 15 Gew.-% des Weichmachers,
0,2 bis 2 Gew.-% des Netz- und Dispergieradditives,
0,5 bis 5 Gew.-% der Organosilane, und
80 bis 95 Gew.-% von ZnO und dem weiteren wärmeleitfähigen Füllstoff oder dem Gemisch aus mehreren wärmeleitfähigen Füllstoffen, wobei der Anteil an ZnO in der Mischung der Füllstoffe bis zu 10-30 Gew.-% beträgt.

14. Injizierfähiges thermisches Kontakt- und Füllmaterial nach einem der Ansprüche 1 bis 13, **dadurch gekennzeichnet, dass** es folgendes aufweist:
1 bis 7 Gew.-% der Mischung von silanfunktionalisierten Prepolymeren, wobei das silanfunktionalisierte Prepolymer basierend auf Polyurethanen bis zu 50 Gew.-% ausmacht,
3 bis 8 Gew.-% des Weichmachers,
0,5 bis 1,5 Gew.-% des Netz- und Dispergieradditives,
0,5 bis 1,5 Gew.-% der Organosilane, und
83 bis 93 Gew.-% von ZnO und dem weiteren wärmeleitfähigen Füllstoff oder dem Gemisch aus mehreren wärmeleitfähigen Füllstoffen, wobei der Anteil an ZnO in der Mischung der Füllstoffe bis zu15-25 Gew.-% beträgt.

15. Injizierfähiges thermisches Kontakt- und Füllmaterial nach einem der Ansprüche 1 bis 14, **dadurch gekennzeichnet, dass** es silikonfrei ist.

16. Verwendung des injizierfähigen thermischen Kontakt- und Füllmaterials nach einem der Ansprüche 1 bis 15 bei großflächigen elektronischen Bauteilen.

17. Verwendung des injizierfähigen thermischen Kontakt- und Füllmaterials nach einem der Ansprüche 1 bis 15 für Batteriesysteme mit einem komplexen Akkumulatoraufbau.
